# EUROPEAN PATENT SPECIFICATION

(11) **EP 2 599 374 B1**
(45) Date of publication and mention of the grant of the patent: **14.06.2017**
(21) Application number: 12007674.0
(22) Date of filing: 13.11.2012
(51) Int. Cl.: A01D 34/90, A01G 3/06

(54) **Portable working machine**
Tragbare Arbeitsmaschine
Machine de travail portable

(30) Priority: 01.12.2011 JP 2011263974
(43) Date of publication of application: 05.06.2013
(73) Proprietor: Makita Corporation, Anjo-shi, Aichi 446-8502 (JP)
(72) Inventor: Sumi, Takuya, Shizuoka, 4108535 (JP); Watanabe, Koji, Aichi, 446-8502 (JP); Kojima, Shinya, Aichi, 446-8502 (JP)
(74) Representative: Müller-Boré & Partner Patentanwälte PartG mbB

(56) References cited:
- EP-A1- 0 822 036
- EP-A1- 2 580 954
- EP-A2- 1 403 008
- WO-A1-2011/155339
- GB-A- 2 320 665
- JP-A- 10 127 133
- US-A- 4 733 471

## Description

### BACKGROUND

### 1. Technical Field

The present invention relates to a portable working machine including a control rod, a power source at one end of the control rod, and a working part at the other end of the control rod. The control rod can be split into two or more parts in the longitudinal direction.

### 2. Related Art

A portable working machine such as a brush cutter has been known to have a control rod that can be split into two or more split rods, as disclosed in Japanese Utility Model Registration No. 3123389, for example.

In the working machines, the split rods are connected to one another with a pin as described in the above-mentioned document or with a fasten member. When a pin is used to connect the split rods, a pin insertion clearance is required around the pin and so forth, and thus these sprit rods cannot be fixedly connected to one another. As a result, when the working machine is in use as being held by one split rod in the power source side, the other split rod in the working part side is likely to swing to the one split rod. When a fasten member is used to connect the split rods, the split rods can be fixedly connected. However, a wrench for tightening the fasten member is required and so forth. When a pin is used, the wrench is not needed. It is a bother to bring the wrench to fasten or to loosen the fasten member.

As described above, a portable working machine is required, when a rod is split in two or more split rods, to make operations easier to connect and separate the split rods and to connect the split rods fixedly.
GB 2 320 665 A discloses a free-cutting tool with a guide tube, located at one end of which is a drive motor and whereof the other end supports a cutting head. A drive shaft for connecting the drive motor to the cutting head is mounted in the guide tube, in which case the guide tube can be separated into an upper tube section connected to the drive motor and a lower tube section connected to the cutting head. The facing ends of the tube sections are detachably connected to each other by way of a coupling member. To achieve reliable mounting and dismantling of the guide tube, the tube section of the guide tube axially releasable from the coupling member can be locked by way of a locking device and can be fixed with frictional contact in the coupling member by way of a clamping device rotatable about its central axis.
EP 0 822 036 A1 discloses a split-boom power tool, wherein the split rods are connectable to each other by a joint comprising a sleeve and a lever, wherein by turning the lever, a nut arranged at one end of the lever is pulled to tighten the sleeve.

### SUMMARY

Accordingly, it is an object of the present invention is to provide a portable working machine. A first aspect of the present invention is to provide a portable working machine comprising: a control rod that can be split into two or more split rods in a longitudinal direction; a power source provided at one end of the control rod; and a working part provided at the other end of the control rod, wherein: the two or more split rods are fixedly connected to one another by tightening a fasten member provided in a connecting part using a lever; the fasten member has a screw configuration for tightening; the lever has an elongate grip portion and an engaging portion, the engaging portion is formed in one end of the elongate grip portion to be combined with the fasten member; the turning angle of the lever is about 270 degrees; and the lever is turned for screwing the fasten member and is located at a position along with the control rod when the fasten member is tightened with the lever.

According to the present invention, the lever may have an arch shape bended in the opposite side to a turning direction of the lever for tightening the fasten member.

According to the present invention, the fasten member and the lever may be formed individually, include concave-convex shapes respectively, and be combined with one another by engaging the concave-convex shapes; each of the concave-convex shapes may have rotationally symmetric shapes based on corresponding polygon shapes; and the number of vertices in the concave-convex shape of the fasten member may be different from the number of vertices in the concave-convex shape of the lever.

According to the present invention, the fasten member may include a convex portion; the lever may include an insertion hole into which the convex portion of the fasten member is inserted; the fasten member may be combined with the lever when the convex portion of the fasten member is inserted into the insertion hole; the two or more split rods may be fixedly connected to one another by tightening the fasten member with the lever; and the lever may be made of a resin material, include the insertion hole at one end, and have a metallic catch part which engages with the convex portion of the fasten member in the insertion hole.

According to the present invention, the fasten member may include: a nut configured to engage with the lever; and an elastic member placed to contact an inner surface of the insertion hole and an outer surface of the nut.

According to the present invention, the metallic catch part may be inserted and fixed in the insertion hole of the lever; an elastic member may be inserted in the insertion hole to press and hold the metallic catch part in the insertion hole; and the elastic member may approach to the connecting part when the fasten member is tightened with the lever.

According to the present invention, the fasten member may include a right-hand thread bolt disposed in an intersect direction to a longitudinal direction of the control rod and a nut; the lever may be combined with the fasten member and is located at a right bottom side of the control rod in a usage state of the portable working machine in which the working part is in the right and forward direction of the user; and a grip portion of the lever may be in the direction facing to the power source side when the fasten member is tightened with the lever.

According to the present invention, the fasten member may include a right-hand thread bolt disposed in an intersect direction to a longitudinal direction of the control rod and a nut; the lever may be combined with the fasten member and is located at an upper left side of the control rod in a usage state of the portable working machine in which the working part is in the right and forward direction of the user; and a grip portion of the lever may be in the direction facing to the power source side when the fasten member is tightened with the lever.

With the present invention, two or more split rods can be fixedly connected to one another by tightening the fasten member with the lever provided in the connecting part. Therefore, it is possible to improve operations in connecting or separating of the split rods. In addition, with the present invention, when two or more split rods are fixedly connected to one another by tightening the fasten member with the lever, the lever is in a position along with the control rod. In the fastened state, the lever combined with the fasten member does not protrude in an different outward direction to the longitudinal direction of the control rod. Therefore the lever is not likely to disturb the work with the portable working machine. The user can hold the lever with the connecting part of the control rod by a hand. The lever does not disturb the work. The user holds the rod during the work and may easily prevent the lever from loosening during the work.

### BRIEF DESCRIPTION OF THE DRAWINGS

Fig. 1 is a perspective view of a brush cutter according to an embodiment of the present invention;
Fig. 2 is a drawing explaining a usage state of the brush cutter shown in Fig. 1.
Fig. 3 is a side view of the brush cutter shown in Fig. 1 when a front split rod is replaced;
Fig. 4 is a perspective view of a connecting part of the rod;
Fig. 5 is a drawing of parts used in the connecting part;
Fig. 6 is a side view of the lever shown in Fig. 5;
Fig. 7 is a cross-sectional view of a portion of the lever shown in Fig. 5 where a nut is inserted;
Fig. 8 is a drawing explaining the turn angle of the lever;
Fig. 9 is a cross-sectional view of the connecting part of the control rod when the front split rod is half inserted into the connecting part;
Fig. 10 is a cross-sectional view of the connecting part when the front sprit rod is fully inserted into the connecting part;
Fig. 11 is a cross-sectional view of the connecting part when the nut with the lever is tightened; and
Fig. 12 is a perspective view showing a modified brush cutter of the present invention.

### DESCRIPTION OF EXEMPLARY EMBODIMENTS

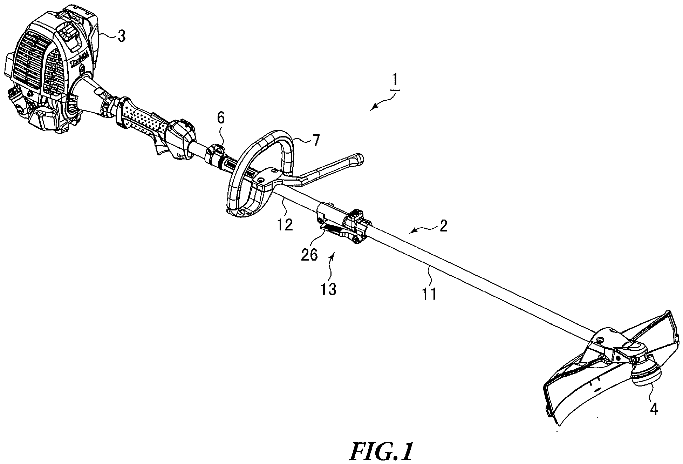

Fig. 1 is a perspective view of a brush cutter 1 according to an embodiment of the present invention. The brush cutter 1 is a type of portable working machines that a user M carries in use. The brush cutter 1 has a control rod 2 shaped in a long pipe. An engine 3 is provided at one end of the control rod 2. Instead of the engine 3,an drive motor driven by a battery power may be used as a power source. A tool 4 is attached to the other end of the control rod 2. The working tool 4 is driven by the power source such as the engine 3. Here, the tool 4 is connected to the engine 3 through a drive shaft built in the control rod 2, and is driven by the driving force of the engine 3.

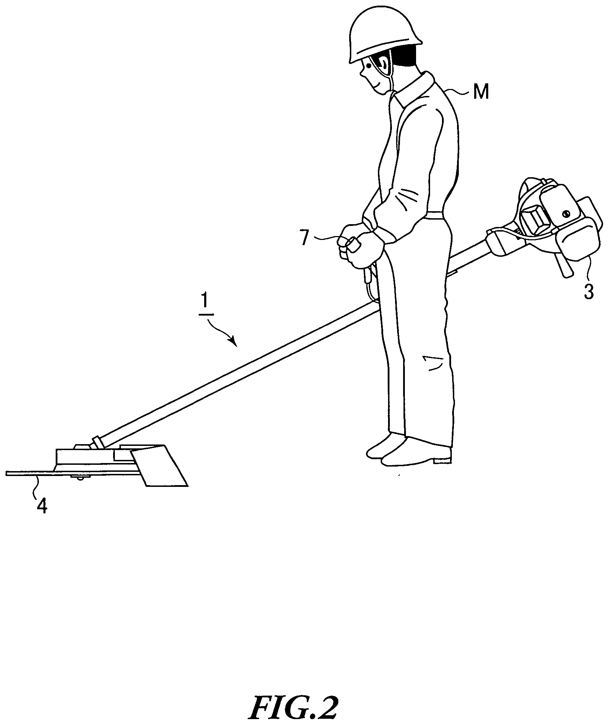

In addition to these, a hanger 6, a handle 7 and so forth are mounted to the control rod 2. Fig. 2 is a drawing explaining a usage state of the brush cutter 1 shown in Fig. 1. The portable brush cutter 1 can be hanged from a shoulder of a user M in use. The hanger 6 is used to attach a hang strap (not shown) to the brush cutter 1. The user M holds the handle 7 of the hanged brush cutter 1 and executes the work to cut brush, for example.

By the way, the control rod 2 of the brush cutter 1 shown in Fig. 1 may be split into two parts, a front split rod 11 in the front side of the control rod 2 and a rear split rod 12 in the rear side of the control rod 2. The control rod 2 may be split into three or more parts. The control rod 2 is a split-type control rod as to be split into two or more parts, and therefore the brush cutter 1 is able to be divided to reduce the size of the brush cutter 1. Consequently, the portability and mobility of the brush cutter 1 are improved. The tool 4 is attached to the front end of the front split rod 11. The engine 3 is mounted to the rear end of the rear split rod 12. The front split rod 11 and the rear split rod 12 is connected by a connecting part 13. The front split rod 11 may be replaced to a different tool type front split rod 11 with a different tool. Therefore, it is possible to use the one portable working machine 1 as a brush cutter and a different tool type working machine.

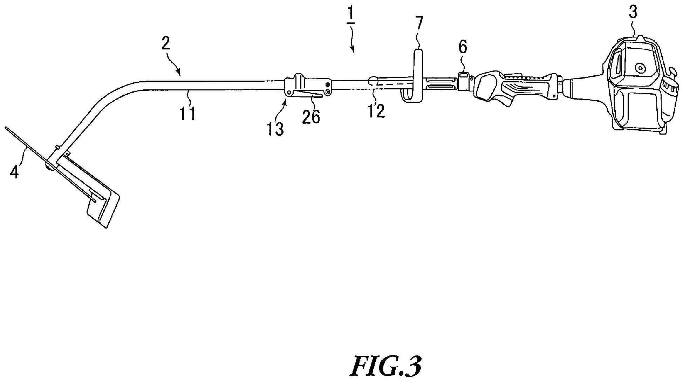

Fig. 3 is a side view of the brush cutter 1 shown in Fig. 1 when a front split rod is replaced to a different tool type front split rod 11 with a different cutting blade. In Fig. 1, a straight shaped front split rod 11 is mounted in the brush cutter 1. In Fig. 3, in contrast, a bent shaped front split rod 11 is mounted in the brush cutter 1. The straight shaped split rod and the bent shaped split rod are alternatively used properly according to the working situations, for example. In addition to these, the front split rod 11 is able to be replaced to different type front split rods with different tools, for example to a pole saw type, a hedge trimmer type, a cultivator type, or a coffee harvester type.

When the control rod 2 is configured to be split, it may be preferred to take into account for the configuration 1) to be easy to connect and separate the rods; 2) to fixedly connect the front split rod 11 and the rear split rod 12 to each other; and 3) to reduce the drive power loss by the connection of separated drive shafts. In addition, in order the front split rod 11 and the rear split rod 12 to be connected detachably to one another, a lever 26 is preferred to be used to tighten or loosened connecting parts such as a nut 23 and a bolt 24 for the connection. However, in a case where the lever 26 is made of resin, an engaging portion 52 of the lever 26 is deformed due to excessive or repeatable tightening and so on, and therefore it may not be possible to tighten or loosen the bolt 23 and nut 24 by the resin lever 26 over a long period of time. In another case where the lever 26 is made of a high-strength material (metallic material) such as zinc and aluminum, the longtime operation seems to be realized. However, when all of the bolt 23, the nut 24 and the lever 26 are made of metal, they are required to fit loosely one another. Because of the required clearances between the parts, the engaging portion 52 becomes worn by the continuous vibration during the work and so forth. Consequently, it may not be realized to tighten or loosen the bolt 23 and nut 24 over a long period of time with metal lever 26.

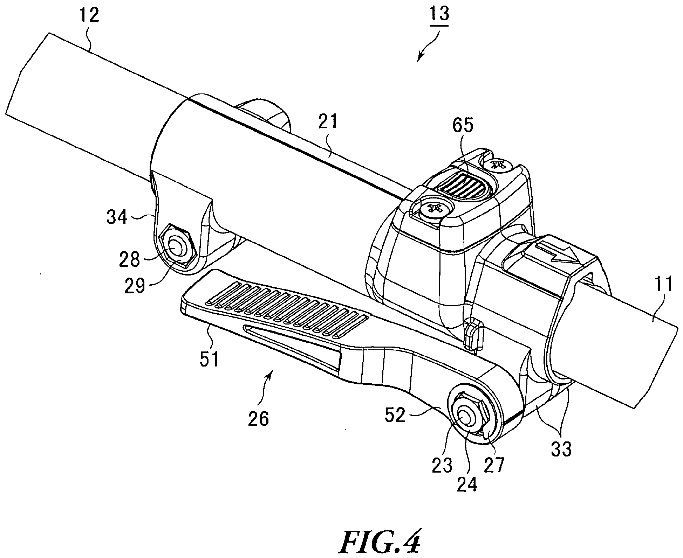

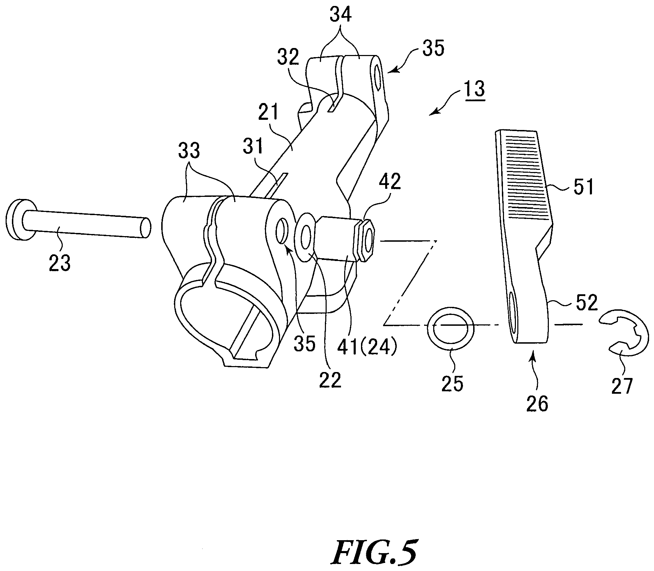

Fig. 4 is a perspective view of the connecting part 13 of the rod 2. Fig. 5 shows parts used in the connecting part 13. The connecting part 13 has a connecting pipe 21, washers 22, bolts 23, nuts 24, an O-ring 25, the lever 26 and a ring stopper 27.

The connecting pipe 21 is molded with aluminum material to form into a cylindrical pipe shape, for example. The front split rod 11 and the rear split rod 12 are inserted into insides of the cylindrical shaped of the connecting pipe 21 from its both ends respectively. In the both ends of the connecting pipe 21, slits 31 and 32 are formed respectively along with the longitudinal direction of the connecting pipe 21. In addition, on the outer periphery of the connecting pipe 21, a pair of screwing portions 33 and a pair of screwing portions 34 are formed. The slit 31 is located between the pair of screwing portions 33. The slit 32 is located between the pair of screwing portions 34. In each of the pair of screwing portions 33 and 34, through-holes 35 are formed in the intersecting direction to the longitudinal direction of the connecting pipe 21. The bolts 23 are inserted into the through-holes 35 in each pair of the screwing portions 33 and 34 respectively, and the slits 31 and 32 are located between each pair of the screwing portions 33 and 34. The bolts 23 penetrate the through-holes 35 as to form protruding portions. The nuts 23 are fit on the protruding portions. The bolt 23 is screwed into the nut 24 and tightened, and therefore the connecting pipe 21 securely holds the inserted split rod (for example, the front split rod 11) therein. With the fasten construction, the connecting pipe 21 is fastened on the inserted rod. The front split rod 11 and the rear split rod 12 are inserted into the connecting pipe 21 from the both ends thereof respectively, and are connected to each other by the connecting pipe 21.

The bolt 23 and the nut 24 are made of metal or alloy, and have right-handed double thread screws, for example. The bolt 23 and the nut 24 may have left-handed screws or single thread screws. Here, a double thread screws moves longer in the screw axis direction than a single thread screws when the nut 24 turns around the bolt 23. With the double thread screw, the screw is able to be tightened and to be released even when the turning angle of the lever 26 is limited to about 270 degrees, as described later. In the washer 22, the tip of the bolt 23 is inserted. The washers 22 are sandwiched between the nuts 24 and the screwing portions 33 and 34 of the connecting pipe 21, respectively.

The nut 24 has an approximately regular hexagon outer shape which functions as a convex portion 41. A screw hole is formed at the center of the approximately regular hexagonal convex portion 41. The bolt 23 is inserted into the screw hole. On the outer periphery of the nut 24, a slit 42 is formed to be fitted in the ring stopper 27. Here, the nut 24 may have a structure in which both an approximately regular hexagonal convex portion 41 without the screw hole and a screw portion including a screw hole for the bolt 23 are arranged and combined in the axis direction of the screw hole.

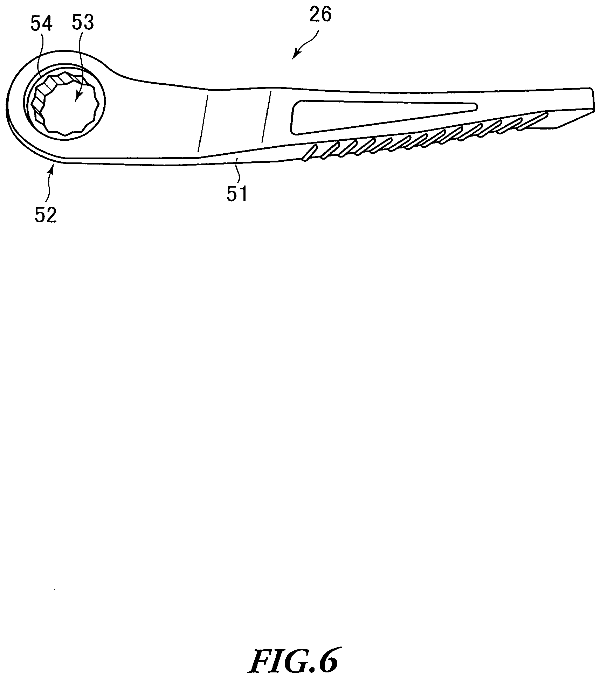

Fig. 6 is a side view showing the lever 26 shown in Fig. 5. The lever 26 is made of resin material as to be formed in a light weight. The lever 26 has a grip portion 51. The grip portion 51 is formed in a long beam shape which is shorter than the interval between two screwing portions 33 and 24 which are arranged in the longitudinal direction of the connecting pipe 21. The grip portion 51 is bended as to be formed in an arch shape. In one end of the elongate grip portion 51, an engaging portion 52 is formed. The nut 24 is inserted into the engaging portion 52. The nut 24 engages with the engaging portion 52.

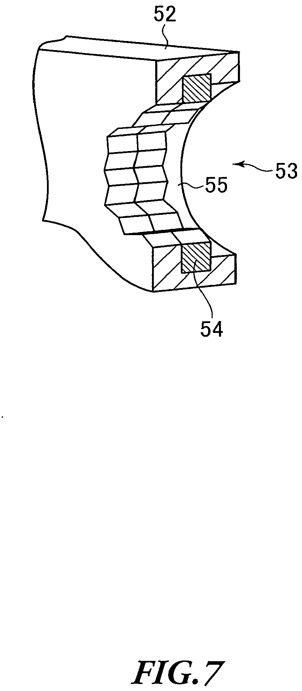

Fig. 7 is a cross-sectional view of a portion of the lever 26 shown in Fig. 5 where a nut is inserted. In the engaging portion 52 of the lever 26, an insertion hole 53 is formed to receive the nut 24. In the insertion hole 53, a metallic or alloy catch part 54 is provided. The catch part 54 has a metallic flat plate and an insertion hole 53 for the nut 24. The catch part 54 is disposed in the center of the insertion hole 53 of the lever 26. The catch part 54 is inserted into the mold to inject resin for the lever 26. As the metallic catch part 54 is provided in the engaging portion 52 of the lever 62, the engaging strength of the engaging portion 52 of the lever 26 with the nut 24 is improved. The resin engaging portion 52 of the lever 26 is able to be prevented from wearing or deforming. Each of the insertion hole 53 of the lever 26 and the insertion hole of the catch part 54 has a same inner shape which is obtained as an outline shape from two regular hexagons being overlapped and rotated by 30 degrees each other, each of the regular hexagons has a little greater inner size than the outer size of the nut 24, that is, each of the insertion holes has a star shape with twelve vertices. The insertion hole 53 has a rotationally symmetric inner shape based on a polygonal shape. In the insertion holes of the lever 26 and the catch part 54, the convex portion 41 of the nut 24 is inserted.

Within the insertion hole 53 of the lever 26, one axis side potion 55 next to the inside direction of the catch part 54, the potion 55 is located on the right side of the catch part 54 in Fig. 7, is formed in a circle inner shape rather than in a star shape with twelve vertices. Therefore, as shown in Fig. 6, a part of the side surface of the catch part 54 is exposed in the insertion hole 53. The O-ring 25 is formed by elasticity material. The O-ring 25 is inserted into the insertion hole 53 of the lever 26 so as to fit in the axis side potion 55 next to the exposed inner surface of the catch part 54. The O-ring 25 is set between the nut 24 inserted into the insertion hole 53 of the lever 26 and the insertion hole 53 of the lever 26. As the O-ring 25 is provided in the described position, the lever 26 is able to be held and fixed on the nut 24, even when the nut 24 and the catch part 54 of the lever 26 are both made of metallic material and an insertion clearance is needed there between. The lever 26 is able to be prevented from shaking and rattling to the nut 24. Here, another configuration may be possible in which the separated metallic catch part 54 is inserted into the insertion hole 53 of the lever 26 and then the O-ring 25 is inserted into the insertion hole 53 to hold the separated catch part 54 within the insertion hole 53.

As shown in Fig. 5, in the connecting part 13, the bolt 23 is inserted into the nut 24, and the nut 24 is inserted into the insertion hole 53 of the lever 26. Then, the slit 42 formed in the outer periphery of the nut 24 is exploded from the insertion hole 53 of the lever 26 and the ring stopper 27 is fitted in the slit 42. With this configuration, the lever 26 is firmly combined with the nut 24. Moreover, the inner shape of the insertion hole 53 of the lever 26 is formed in a star shape with twelve vertices, and therefore it is possible to adjust the insertion angle of the lever 26 to the regular hexagonal nut 24 by adjusting in units of 30 degrees. With the configuration, as shown in Fig. 4, it is possible to adjust the range of the turning angle of the lever 26 engaged to the nut 24 such that the lever 26 is in a position along with the control rod 2 or the connecting part 13 when the nut 24 is tightened with the lever 26. In addition, after the nut 24 is tightened, the washer 22 is able to insert to the tightened nut 24. The lever 26 is able to combine with the nut 24 in the preferred adjusting angle. Here, the number of the vertices of the insertion hole 53 of the lever 26 is not limited to twelve as long as the number is in any integer number multiple to the number of the vertices of the convex portion 41 of the nut 24. The convex portion 41 is loosely fitted into the insertion hole 53 of the lever 26 to form the engaging portion 52. However, the number of the vertices of the insertion hole 53 of the lever 26 increases, the contact surfaces with the nut 24 decrease. Consequently the contact surfaces are likely to abrade each other. Therefore, the number of the vertices of the insertion hole 53 of the lever 26 is preferred within twice or three times multiple to the number of the vertices of the convex portion 41 of the nut 24.

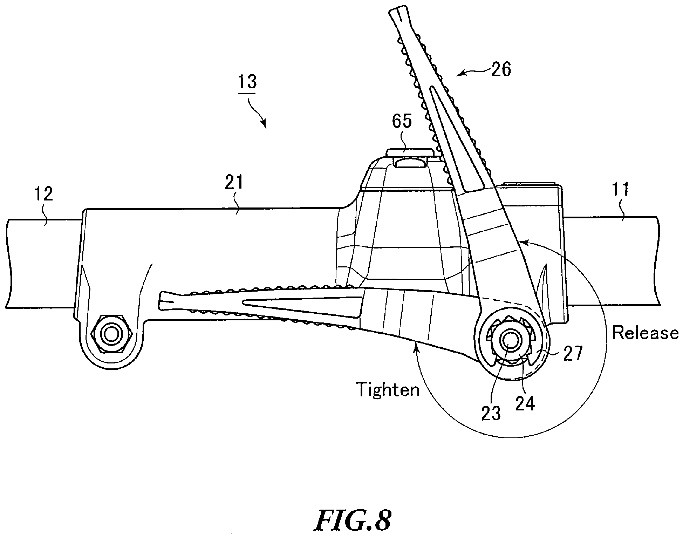

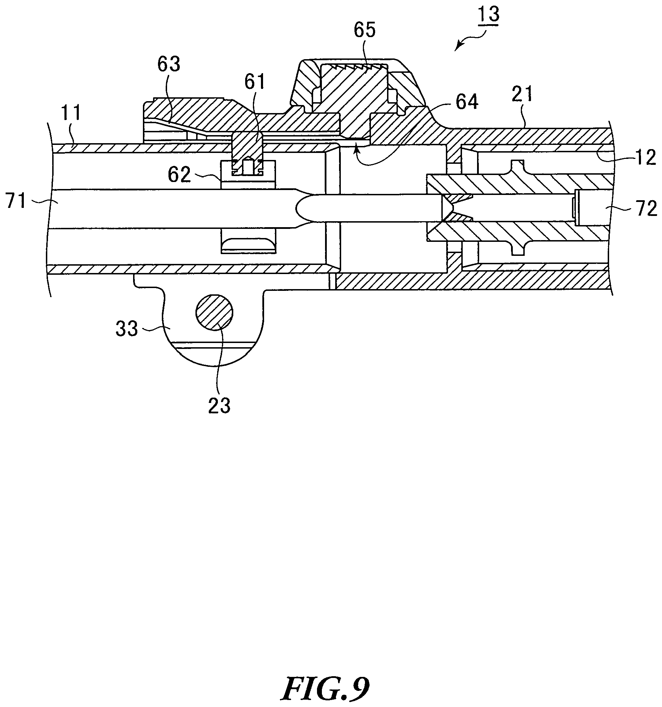

Next, connection and separation of the front split rod 11 and the rear split rod 12 will be explained with reference to Figs. 8 to 10. Fig. 8 is a drawing explaining the turning angle of the lever 26. Fig. 9 is a cross-sectional view of the connecting part 13 of the control rod 2 when the front split rod 11 is half inserted into the connecting part 13.

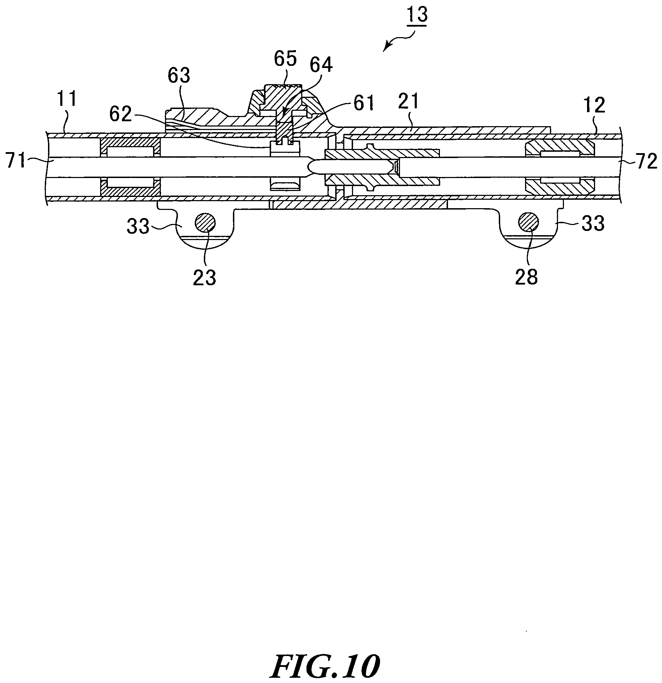

Fig. 10 is a cross-sectional view of the connecting part 13 when the front split rod 11 is fully inserted into the connecting part 13. The connecting part 13 is fixed on the front end of the rear split rod 12 using another pair of bolt 28 and nut 29. The front split rod 11 can be inserted into and drawn from the connecting part 13 which is fixed on the front end of the rear split rod 12.

As shown in Fig. 8, the nut 24 is tightened with the lever 26 when the free end of the lever 26 faces to a side of the engine 3 and the lever 26 extends along or is in parallel with the control rod 2. The front split rod 11 is inserted into and fixedly held by the connecting part 13. The nut 24 has right-handed screws, so that the fixed lever 26 can rotate from the tightened position in the down and away direction of the control rod 2. The lever 26 may further rotate to the full rotation position where the lever 26 stands up and extending in the upward direction of the control rod 2. This turning angle of the lever 26 is about 270 degrees. In the full rotated release position where the lever 26 extends in upward direction from the control rod 2, the nut 24 is loosened. The front split rod 11, which was inserted into and fixedly held in the connecting part 13, is able to draw from the connecting part 13.

To connect the front split rod 11 and the rear split rod 12 each other, the front split rod 11 is inserted into the connecting part 13 as shown in Fig. 9 when the lever 26 stands from the control rod 2. During this insertion process, a locking pin 61 provided as to protrude from the front split rod 11 is gradually pushed down into the front split rod 11 by a guide 63 formed in the connecting part 13. The locking pin 61 is gradually pushed down against to the elastic force of a spring member 62 provided inside of the front split rod 11. When the front split rod 11 is further inserted into the connecting part 13, the locking pin 61 of the front split rod 11 protrudes again as to engage with an engaging hole 64 of the connecting part 13 as shown in Fig. 10. The locking pin 61 is pushed up by the spring member 62 and inserted into the engaging hole 62 of the connecting part 13. A release button 65 provided in the engaging hole 64 of the connecting part 13 is pushed up by the locking pin 61.

In the state in which the front split rod 11 is fully inserted into the connecting part 13, the locking pin 61 is biased by the spring member 62 and engages with the engaging hole 64 of the connecting part 13. The locking pin 61 defines the inserted position of the front split rod 11. The front split rod 11 is connected to the connecting part 13. The front split rod 11 and the rear split rod 12 are connected by the connecting part 13. In addition, a front drive shaft 71 provided inside of the front split rod 11 and a back drive shaft 72 provided inside of the rear split rod 12 are connected to each other in the connecting part 13. These front drive shaft 71 and back drive shaft 72 constitute a drive shaft to transmit the driving force of the engine 3 to the cutting blade (tool 4).

After the front split rod 11 is inserted into the connecting part 13 until the locking pin 61 engages with the engaging hole 64, the lever 26 standing from the control rod 2 is turned. The lever 26 is able to be turned as to be in the tightening position along with the control rod 2. By the operation, the nut 24 combined with the lever 26 is tightened. The nut 24 provided in the connecting part 13 is tightened, and then the connecting part 13 is fastened on the front split rod 11 inserted into the connecting part 13. The front split rod 11 inserted into the connecting part 13 is tightly fastened so as not to swing to the rear split rod 12 and the connected part 13 in use. With above connecting operations, the front split rod 11 is connected to the rear split rod 12 by the connecting part 13.

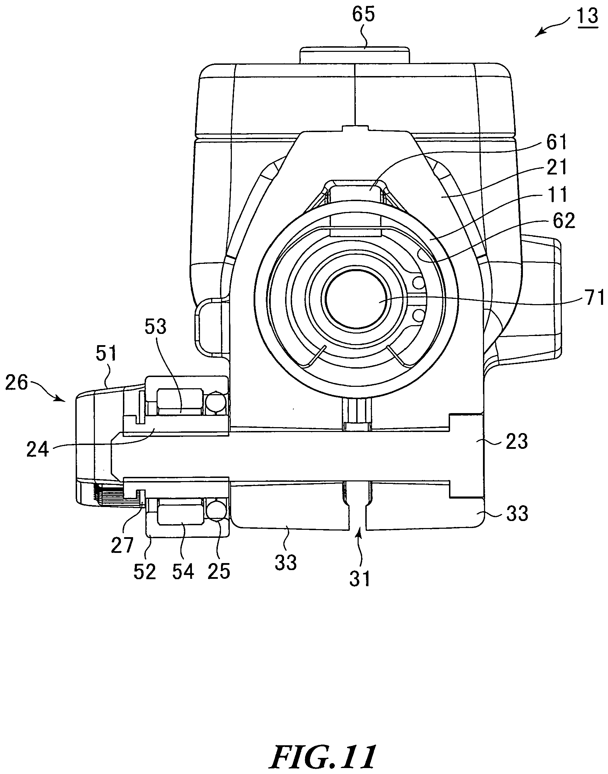

Fig. 11 is a cross-sectional view of the connecting part 13 when the nut 24 with the lever 26 is tightened. The O-ring 25 inserted into the insertion hole 53 of the lever 26 is squashed. The O-ring 25 is squashed so as to spread and contact with both of the inner surface of the insertion hole 53 of the lever 26 and the outer surface of the nut 24. In the spreading state, the lever 26 is hold by the spreading O-ring 25 and is able to be operated without jerking, even when a required insertion clearance is formed between the metallic catch part 54 and the metallic nut 24 for loosely fitting each other.

To separate the front split rod 11 and the rear split rod 12, the user M performs inverse operations to the above described operation. To be more specific, the lever 26 is turned from the parallel position with the control rod 2 to the stand position from the control rod 2. Next, the release button 65 is being pushed downwardly and then the front split rod 11 is able to be pulled out from the connecting part 13. When the release button 65 is pushed, the locking pin 61 is pressed into the front split rod 11 and therefore detached from the engaging hole 64. When the release button 65 is pushed, the front split rod 11 is able to be drawn from the connecting part 13. With the above operations, the front split rod 11 is able to be detached from the connecting part 13, and the front split rod 11 and the rear split rod 12 are able to be separated from each other.

### <Effects of the embodiment>

As described above, with the present embodiment, two split rods, the front split rod 11 and the rear split rod 12 may be fixedly connected to each other when the nut 24 is tightened with the lever 26 in the connecting part 13. Therefore, the connecting operation and the separating operation of the split rods are easy and effective. In addition, with the present embodiment, the lever 26 combined with the nut 24 is in a position along with the control rod 2 when the two split rods 11 and 12 are fixedly connected to each other and the lever 26 is turned as to tightening the nut 24. Accordingly, in the tightened state, the lever 26 combined with the nut 24 does not protrude in the different outward direction to the extending direction of the control rod 2, and therefore does not disturb the work. As the user M is able to hold the lever 26 with the connecting part 13 by a hand, the user M is able to work as holding the rod 2 and then easily prevent the lever 26 to turning during the work. In addition, the control rod 2 can be split into two parts, the front split rod 11 and the rear split rod 12 in the longitudinal direction. Therefore, it is possible to divide the brush cutter 1 as to reduce the size thereof. The portability and mobility of the brush cutter 1 are improved.

Moreover, with the present embodiment, as shown in Fig. 8, the lever 26 has a bended shape in the opposite side to the turning direction for tightening the nut 24 with the lever 26. Therefore, the user M is able to easily hold the lever 26 by the hand or the fingers and turn the lever 26 in the tightening direction. The user M is able to hold the rod 2 with the fingertips on the bent lever 26, and thus does not need to put excess force in the arm or the hand to hold the rod 2, when holding the lever 26 with the connecting part 13 by the hand.

In addition, with the present embodiment, the nut 24 and the lever 26 as the fasten member are formed separately and combined with each other by engaging their concave-convex shapes each other. Moreover, the outer shape of the nut 24 or the convex portion 41 is a regular hexagon, and the inner shape of the insertion hole 53 of the lever 26 is like a star with twelve vertices, which is obtained as an outline shape by two regular hexagons being overlapped and shifted by 30 degrees from each other. That is, the number of vertices of the concave-convex shape of the nut 24 is different from a number of vertices of the concave-convex shape of the insertion hole 53 of the lever 26. In addition, each of the concave-convex shapes includes a polygon which is rotationally symmetric. Therefore, the engage angle of the lever 26 to the nut 24 is adjustable finely, for example in units of 30 degrees. The engage angle of the lever 26 may be adjusted in a position where the lever 26 is along with the control rod 2 as shown in Fig. 4 when the nut 24 is tightened with the lever 26 to fixedly connect the split rods.

In addition, with the present embodiment, the lever 26 has the insertion hole 53 and the convex portion 41 of the nut 24 is inserted into the insertion hole 53. The nut 24 is combined with the lever 26 when the convex portion 41 of the nut 24 is inserted into the insertion hole 53. Therefore, by tightening the nut 24 with the lever 26, two divided split rods 11 and 12 are fixedly connected to each other. Moreover, the lever 26 has the metallic catch part 54 in the insertion hole 53 and the metallic catch part 54 engages with the convex portion 41 of the nut 24. Therefore, the engaging portion of the resin lever 26 with the nut 24 is not likely to be damaged in the long time usage, even when the lever 26 is made of resin to reduce its weight. The engaging portion of the resin lever 26 with the nut 24 is not likely to be damaged, even when the nut 4 is loosely fitted into the insertion hole 53 of the lever 26. The engaging portion of the resin lever 26 with the nut 24 is not likely to be damaged, even when a strong force is applied to the lever 26.

With the present embodiment, the O-ring 25 as an elastic member is provided in the insertion hole 53 of the lever 26. The O-ring 25 spreads and contacts the outer surface of the nut 24 and the inner surface of the insertion hole 53. Therefore, the insertion clearance between the nut 24 and the insertion hole 53 of the lever 26 can be filled with the spreading O-ring 25 even when the nut 24 and the insertion hole 53 are loosely fitted. By the configuration, the lever 26 is able to be prevented from shaking and rattling to the nut 24. Both of the nut 24 and the catch part 54 of the lever 26 are made of metal, and the nut 24 is loosely fitted into the catch part 54. Under this configuration, the lever 26 is fixedly held in the connecting part 13 by the spreading O-ring 25 even when the lever 26 is moved or shaken to the nut 24 by vibration and so forth. The metal catch part 54 of the lever 26 and the nut 24 are prevented from damaging, for example, abrading or wearing by the vibration in use.

Here, the spread O-ring 25 may only approach to the side surface of the connecting part 13 instead of being sandwiched between the nut 24 and the side surface of the connecting part 13 when the nut 24 is fastened by the lever 26. Even in the approaching state, the O-ring 25 as an elastic member is not likely to drop from the position between the lever 26 and the connecting part 13.

Meanwhile, another configuration is possible where the separated metal catch part 54 is inserted into the insertion hole 53 of the lever 26, and then the O-ring 25 is also inserted into the insertion hole 53 to hold the separated catch part 54 in the insertion hole 53. With this configuration, the O-ring 25 as an elastic member is inserted into the insertion hole 53 as to overlap to the catch part 54, and therefore the separated catch plate 54 is able to be pressed and fixed in the insertion hole 53 of the lever 26. In addition, in a tightening state where the nut 24 is tightened by the lever 26, the O-ring 25 is squashed as to be sandwiched between the side surface of the connecting part 13 and the metal catch part 54 and then the lever 26 is kept in a stable position to the connecting part 13 by the frictional forces with the O-ring 25.

In addition, with the present embodiment, in the usage state in Fig. 2, the control rod 2 is positioned in the right side of the user M, the lever 26 is located on the right and down side of the control rod 2, and thus the user M is able to operates the lever 26 with the right hand just by pulling to turn the lever 26 in the tightening direction during the work. The user M can easily tighten the nut 24 with the lever 26 just by gripping the lever 26 with the control rod 2 during the work. The lever 26 is easily prevented from opening during the work. The user M is able to tighten the loosed nut 24 during the work with the lever 26 without interrupting the work.

As described above, with the brush cutter 1 according to the present embodiment, the metal catch part 54 and the O-ring 25 as an elastic member are provided in the lever 26 as the fasten member and then the engaging portion 52 of the lever 26 may be prevented from wearing or deforming. With the present embodiment, it is possible to solve the problems associated with the split-type control rod 2. The portability, mobility and workability of the brush cutter 1 are improved and the brush cutter 1 endures in the long term usage.

Above embodiment is an preferred embodiment of the present invention. The present invention is not limited by the above embodiment. Embodiments of the present invention are able to modified or alternated from the above embodiment within the gist of the invention. With the above-described embodiment, the nut 24 as a fasten member is inserted into the insertion hole 53 of the lever 26. For example, the bolt 23 as a fasten member may be inserted into the insertion hole 53 of the lever 26 instead of the nut 24. An elastic member is not limited to the O-ring 25. The elastic member may be integrally formed by injection molding of the resin lever 26 with the metallic catch part 54. However, as described in the above-mentioned embodiment, by separating the elastic member from the lever 26 and using the O-ring 25 as the elastic member, the structure of the engaging portion 52 is able to be simplified and the cost is reduced.

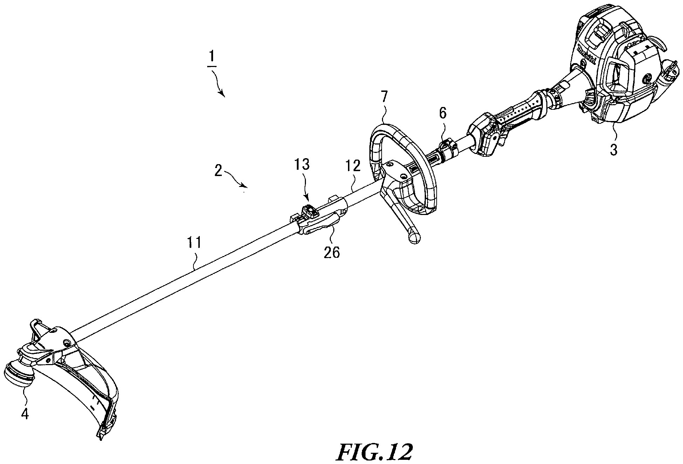

Fig. 12 is a perspective view showing a modified brush cutter 1 of the present invention. As shown in Fig. 12, in the usage state of the brush cutter 1 where the cutting blade is placed in the right and front position of the user M, the brush cutter 1 has the lever 26 in the left and upside position of the control rod 2. The lever 26 is combined with the nut 24, and the grip portion 51 of the lever 26 faces to the side of the engine 3 when the nut 24 is tightened with the lever 26.

In the modified embodiment of the brush cutter 1, the lever 26 is positioned in the upper and left side of the control rod 2. Therefore, the control rod 2 is located at the right side of the user M, the user M operates and pulls down the lever 26 in near side and then the nut 24 is tightened with the lever 26 during the work. The user M can easily tighten the nut 24 with the lever 26 to prevent the nut 24 from being loosen during the work just by gripping the lever 26 with the control rod 2. In addition, in the tightening state of the lever 26, the gravity applied to the lever 26 functions along with the tightening direction of the lever 26. Even when the lever 26 is turned to be loosening by the vibration during the work and so forth, the weight of the lever 26 functions as a force to tighten the lever 26. By the function, the lever 26 is not likely to be loose by the vibration and so forth.

## Claims

1. A portable working machine (1) comprising:
a control rod (2) that can be split into two or more split rods (11, 12) in a longitudinal direction;
a power source (3) provided at one end of the control rod (2); and
a working part (4) provided at the other end of the control rod (2), wherein:
the two or more split rods (11, 12) are fixedly connected to one another by tightening a fasten member provided in a connecting part (13) using a lever (26); the lever (26) has an elongate grip portion (51) and an engaging portion (52), the engaging portion (52) is formed in one end of the elongate grip portion (51) to be combined with the fasten member; and the lever (26) is located at a position along with the control rod (2) when the fasten member is tightened with the lever (26); **characterized in that**
the fasten member has a screw configuration for tightening;
the turning angle of the lever (26) is about 270 degrees; and
the lever (26) is turned for screwing the fasten member.

2. The portable working machine (1) according to claim 1, wherein the lever (26) has an arch shape bended in the opposite side to a turning direction of the lever (26) for tightening the fasten member.

3. The portable working machine (1) according to claim 1 or 2, wherein:
the fasten member and the lever (26) are formed individually, includes concave-convex shapes respectively, and are combined with one another by engaging the concave-convex shapes;
each of the concave-convex shapes have rotationally symmetric shapes based on corresponding polygon shapes; and
the number of vertices in the concave-convex shape of the fasten member is different from the number of vertices in the concave-convex shape of the lever (26).

4. The portable working machine (1) according to any of claims 1 to 3, wherein:
the fasten member includes a convex portion (41);
the lever (26) includes an insertion hole (53) into which the convex portion (41) of the fasten member is inserted;
the fasten member is combined with the lever (26) when the convex portion (41) of the fasten member is inserted into the insertion hole (53);
the two or more split rods (11, 12) are fixedly connected to one another by tightening the fasten member with the lever (26); and
the lever (26) is made of a resin material, includes the insertion hole (53) at one end, and has a metallic catch part (54) which engages with the convex portion (41) of the fasten member in the insertion hole (53).

5. The portable working machine (4) according to claim 4, wherein the fasten member includes:
a nut (24) configured to engage with the lever (26); and
an elastic member (25) placed to contact an inner surface of the insertion hole (53) and an outer surface of the nut (24).

6. The portable working machine according to claim 4 or 5, wherein:
the metallic catch part (54) is inserted and fixed in the insertion hole (53) of the lever (26);
an elastic member (25) is inserted in the insertion hole (53) to press and hold the metallic catch part (54) in the insertion hole (53); and
the elastic member (25) approaches to the connecting part (13) when the fasten member is tightened with the lever (26).

7. The portable working machine (1) according to any of claims 1 to 6, wherein:
the fasten member includes a right-hand thread bolt (23) disposed in an intersect direction to a longitudinal direction of the control rod (2) and a nut (24);
the lever (6) is combined with the fasten member and is located at a right bottom side of the control rod (2) in a usage state of the portable working machine (1) in which the working part (4) is in the right and forward direction of the user; and
a grip portion (51) of the lever is in the direction facing to the power source (3) side when the fasten member is tightened with the lever (26).

8. The portable working machine according to any of claims 1 to 7, wherein:
the fasten member includes a right-hand thread bolt (23) disposed in an intersect direction to a longitudinal direction of the control rod (2) and a nut (24);
the lever (26) is combined with the fasten member and is located at an upper left side of the control rod (2) in a usage state of the portable working machine (1) in which the working part (4) is in the right and forward direction of the user; and
a grip portion (51) of the lever (6) is in the direction facing to the power source (3) side when the fasten member is tightened with the lever (26).

## Patentansprüche

1. Tragbare Arbeitsmaschine (1), umfassend:
eine Steuerstange (2), die in zwei oder mehrere Teilstangen (11, 12) in einer Längsrichtung geteilt werden kann;
eine Kraftquelle (3), die an einem Ende der Steuerstange (2) vorgesehen ist; und
einen Arbeitsteil (4), der an dem anderen Ende der Steuerstange (2) vorgesehen ist, wobei:
die zwei oder mehreren Teilstangen (11, 12) fest mit einander verbunden sind, indem sie unter Verwendung eines Hebels (26) ein Befestigungselement anziehen, das in einem Verbindungsteil (13) vorgesehen ist;
der Hebel (26) einen länglichen Griffabschnitt (51) und einen eingreifenden Abschnitt (52) aufweist, wobei der eingreifende Abschnitt (52) an einem Ende des länglichen Griffabschnitts (51) gebildet ist, um mit dem Befestigungselement kombiniert zu werden; und wobei sich der Hebel (26) in einer Position mit der Steuerstange (2) befindet, wenn das Befestigungselement mit dem Hebel (26) angezogen wird;
**dadurch gekennzeichnet, dass**
das Befestigungselement eine Schraubausgestaltung zum Anziehen aufweist:
der Drehwinkel des Hebels (26) etwa 270 Grad beträgt; und
der Hebel (26) zum Verschrauben des Befestigungselements gedreht wird.

2. Tragbare Arbeitsmaschine (1) nach Anspruch 1, wobei der Hebel (26) eine Bogenform aufweist, die in die gegenüberliegende Seite zu einer Drehrichtung des Hebels (26) zum Anziehen des Befestigungselements gebogen ist.

3. Tragbare Arbeitsmaschine (1) nach Anspruch 1 oder 2, wobei:
das Befestigungselement und der Hebel (26) einzeln gebildet sind, jeweils konkav-konvexe Formen umfassen und durch Eingreifen der konkav-konvexen Formen miteinander kombiniert werden;
jede der konkav-konvexen Formen rotationssymmetrische Formen aufweist, die auf entsprechenden Polygonformen basieren; und
die Anzahl der Scheitelpunkte in der konkav-konvexen Form des Befestigungselements anders als die Anzahl der Scheitelpunkte in der konkav-konvexen Form des Hebels (26) ist.

4. Tragbare Arbeitsmaschine (1) nach einem der Ansprüche 1 bis 3, wobei:
das Befestigungselement einen konvexen Abschnitt (41) umfasst;
der Hebel (26) ein Einsetzloch (53) umfasst, in das der konvexe Abschnitt (41) des Befestigungselementes eingesetzt wird;
das Befestigungselement mit dem Hebel (26) kombiniert ist, wenn der konvexe Abschnitt (41) des Befestigungselementes in das Einsetzloch (53) eingesetzt wird;
die zwei oder mehreren Teilstangen (11, 12) durch das Anziehen des Befestigungselementes mit dem Hebel (26) fest miteinander verbunden werden; und
der Hebel (26) aus Harzmaterial besteht und das Einsetzloch (53) an einem Ende umfasst, und ein metallisches Mitnehmerteil (54) aufweist, das mit dem konvexen Abschnitt (41) des Befestigungselementes in das Einsetzloch (53) eingreift.

5. Tragbare Arbeitsmaschine (1) nach Anspruch 4, wobei das Befestigungselement Folgendes umfasst:
eine Mutter (24), die ausgestaltet ist, in den Hebel (26) einzugreifen; und
ein elastisches Element (25), das aufgesetzt wird, um eine Innenfläche des Einsetzlochs (53) und eine Außenfläche der Mutter (24) zu kontaktieren.

6. Tragbare Arbeitsmaschine (1) nach Anspruch 4 oder 5, wobei:
der metallische Mitnehmerteil (54) eingesetzt wird und in dem Einsetzloch (53) des Hebels (26) befestigt wird;
ein elastisches Element (25) in das Einsetzloch (53) eingesetzt ist, um das metallische Mitnehmerteil (54) in das Einsetzloch (53) zu drücken und dort zu halten; und
das elastische Element (25) sich dem Verbindungsteil (13) nähert, wenn das Befestigungselement mit dem Hebel (26) festgezogen wird.

7. Tragbare Arbeitsmaschine (1) nach einem der Ansprüche 1 bis 6, wobei:
das Befestigungselement rechts einen Gewindebolzen (23) umfasst, der in einer Überschneidungsrichtung zu einer Längsrichtung der Steuerstange (2) und einer Mutter (24) angeordnet ist;
der Hebel (6) mit dem Befestigungselement kombiniert ist und sich an einer rechten Unterseite der Steuerstange (2) in einem Verwendungszustand der tragbaren Arbeitsmaschine (1) befindet, in der der Arbeitsteil (4) rechts und in Vorwärtsrichtung des Verwenders ist; und
ein Griffabschnitt (51) des Hebels in der Richtung ist, die der Kraftquelle (3) zugewandt ist, wenn das Befestigungselement mit dem Hebel (26) angezogen wird.

8. Tragbare Arbeitsmaschine nach einem der Ansprüche 1 bis 7, wobei:
das Befestigungselement rechts einen Gewindebolzen (23) umfasst, der in einer Überschneidungsrichtung zu einer Längsrichtung der Steuerstange (2) und einer Mutter (24) angeordnet ist;
der Hebel (26) mit dem Befestigungselement kombiniert ist und sich an einer oberen linken Seite der Steuerstange (2) in einem Verwendungszustand der tragbaren Arbeitsmaschine (1) befindet, in der der Arbeitsteil (4) rechts und in Vorwärtsrichtung des Benutzers ist; und
ein Griffabschnitt (51) des Hebels (6) in der Richtung ist, die der Kraftquelle (3) zugewandt ist, wenn das Befestigungselement mit dem Hebel (26) angezogen wird.

## Revendications

1. Machine de travail portable (1) comprenant :
une bielle de commande (2) qui peut être séparée en deux ou plusieurs bielles séparées (11, 12) dans une direction longitudinale ;
une source d'énergie (3) fournie à une extrémité de la bielle de commande (2) ; et
une pièce de travail (4) fournie à l'autre extrémité de la bielle de commande (2), dans laquelle :
les deux ou plusieurs bielles séparées (11, 12) sont reliées de manière fixe les unes aux autres par le serrage d'un élément de fixation fourni dans une partie de raccordement (13) en utilisant un levier (26) ;
le levier (26) possède une partie de préhension allongée (51) et une partie de mise en prise (52), la partie de mise en prise (52) est formée dans une extrémité de la partie de préhension allongée (51) à être combinée à l'élément de fixation ; et le levier (26) est situé à une position avec la bielle de commande (2) quand l'élément de fixation est serré avec le levier (26) ;
**caractérisée en ce que**
l'élément de fixation possède une configuration de vis pour serrer ;
l'angle de rotation du levier (26) est d'environ 270 degrés ; et
le levier (26) est tourné pour visser l'élément de fixation.

2. Machine de travail portable (1) selon la revendication 1, dans laquelle le levier (26) possède une forme d'arche pliée dans le côté opposé à une direction de rotation du levier (26) pour serrer l'élément de fixation.

3. Machine de travail portable (1) selon la revendication 1 ou 2, dans laquelle :
l'élément de fixation et le levier (26) sont formés individuellement, comprennent des formes respectivement concaves et convexes, et sont combinés l'un avec l'autre par une mise en prise des formes concaves et convexes ;
chacune des formes concaves et convexes possède une forme à symétrie de rotation basée sur des formes polygonales correspondantes ; et
le nombre de sommets dans la forme concave et convexe de l'élément de fixation est différent du nombre de sommets dans la forme concave et convexe du levier (26).

4. Machine de travail portable (1) selon l'une quelconque des revendications 1 à 3, dans laquelle :
l'élément de fixation comprend une partie convexe (41) ;
le levier (26) comprend un trou d'insertion (53) dans lequel la partie convexe (41) de l'élément de fixation est insérée ;
l'élément de fixation est combiné au levier (26) quand la partie convexe (41) de l'élément de fixation est inséré dans le trou d'insertion (53) ;
les deux ou plusieurs bielles séparées (11, 12) sont reliées de manière fixe les unes aux autres en serrant l'élément de fixation fourni avec le levier (26) ; et
le levier (26) est constitué d'un matériau de résine, comprend le trou d'insertion (53) à une extrémité, et possède une partie d'encliquetage métallique (54) qui se met en prise avec la partie convexe (41) de l'élément de fixation dans le trou d'insertion (53).

5. Machine de travail portable (4) selon la revendication 4, dans laquelle l'élément de fixation comprend :
un écrou (24) conçu pour se mettre en prise avec le levier (26) ; et
un élément élastique (25) placé pour contacter une surface intérieure du trou d'insertion (53) et une surface extérieure de l'écrou (24).

6. Machine de travail portable selon la revendication 4 ou 5, dans laquelle :
la partie d'encliquetage métallique (54) est insérée et fixée dans le trou d'insertion (53) du levier (26) ;
un élément élastique (25) est inséré dans le trou d'insertion (53) pour presser et maintenir la partie d'encliquetage métallique (54) dans le trou d'insertion (53) ; et
l'élément élastique (25) se rapproche de la partie de raccordement (13) quand l'élément de fixation est serré avec le levier (26).

7. Machine de travail portable (1) selon l'une quelconque des revendications 1 à 6, dans laquelle :
l'élément de fixation comprend un boulon à filetage à droite (23) placé dans une direction d'intersection à une direction longitudinale de la bielle de commande (2) et d'un écrou (24) ;
le levier (6) est combiné à l'élément de fixation et est situé sur un côté inférieur droit de la bielle de commande (2) dans un état d'utilisation de la machine de travail portable (1) dans laquelle la pièce de travail (4) se trouve dans la direction droite et avant de l'utilisateur ; et
une partie de préhension (51) du levier se trouve dans la direction qui fait face au côté de la source d'énergie (3) quand l'élément de fixation est serré avec le levier (26).

8. Machine de travail portable selon l'une quelconque des revendications 1 à 7, dans laquelle :
l'élément de fixation comprend un boulon à filetage à droite (23) placé dans une direction d'intersection à une direction longitudinale de la bielle de commande (2) et d'un écrou (24) ;
le levier (26) est combiné à l'élément de fixation et est situé sur un côté supérieur gauche de la bielle de commande (2) dans un état d'utilisation de la machine de travail portable (1) dans laquelle la pièce de travail (4) se trouve dans la direction droite et avant de l'utilisateur ; et
une partie de préhension (51) du levier (6) se trouve dans la direction qui fait face au côté de la source d'énergie (3) quand l'élément de fixation est serré avec le levier (26).
